(19) Europäisches Patentamt
European Patent Office
Office européen des brevets

(11) Veröffentlichungsnummer: **0 349 783 B1**

(12) **EUROPÄISCHE PATENTSCHRIFT**

(45) Veröffentlichungstag der Patentschrift: **01.12.93**

(51) Int. Cl.⁵: **B23Q 11/00**, G01B 5/00

(21) Anmeldenummer: **89110355.8**

(22) Anmeldetag: **08.06.89**

(54) **Verfahren zum Messen und Ausgleichen thermisch bedingter Dehnungen an Maschinen und Apparaten.**

(30) Priorität: **06.07.88 DE 3822873**

(43) Veröffentlichungstag der Anmeldung:
**10.01.90 Patentblatt 90/02**

(45) Bekanntmachung des Hinweises auf die Patenterteilung:
**01.12.93 Patentblatt 93/48**

(84) Benannte Vertragsstaaten:
**AT CH DE ES FR GB IT LI NL SE**

(56) Entgegenhaltungen:
**DD-C- 145 074**
**DE-A- 2 631 199**
**DE-A- 3 620 118**

**INDUSTRIE ANZEIGER, Band 106, Nr. 75, 1984, Seiten 55-56; M. PASCHER:"Kompensation thermisch bedingter Verlagerungen an Werkzeugmaschinen"**

**WERKSTATTTECHNIK, Band 77, Nr. 6, Juni 1987, Seiten 311-314; E. BRINKSMEIER etal.: "Diagnose thermischer Verlagerungen in Schleifmaschinen"**

(73) Patentinhaber: **Spur, Günter, Prof. Dr.-Ing. Drs. h.c.**
**Richard-Strauss-Strasse 20**
**D-14193 Berlin(DE)**

Patentinhaber: **Hoffmann, Eduard, Dr.-Ing.**
**Bei der Jakobskirche 3**
**D-86152 Augsburg(DE)**

Patentinhaber: **Benzinger, Klaus-J., Dr.-Ing.**
**Banaterstrasse 1**
**D-71101 Schönaich(DE)**

Patentinhaber: **Paluncic, Zdravko, Dipl.-Ing.**
**Emdener Strasse 4**
**D-10551 Berlin(DE)**

(72) Erfinder: **Spur, Günter, Prof. Dr.-Ing. Drs. h.c.**
**Richard-Strauss-Strasse 20**
**D-14193 Berlin(DE)**
Erfinder: **Hoffmann, Eduard, Dr.-Ing.**
**Bei der Jakobskirche 3**
**D-86152 Augsburg(DE)**
Erfinder: **Benzinger, Klaus-J., Dr.-Ing.**
**Banaterstrasse 1**
**D-71101 Schönaich(DE)**

EP 0 349 783 B1

Erfinder: **Paluncic, Zdravko, Dipl.-Ing.**
**Emdener Strasse 4**
**D-10551 Berlin(DE)**

**Beschreibung**

Die Erfindung betrifft ein Verfahren gemäß dem Oberbegriff des Anspruches 1, wie beispielsweise aus "Brinkelsmeier; E., Wulfsberg, J.P.: "Diagnose thermischer Verlagerungen in Schleifmaschinen", wt 77 (1987) 6, S. 311 - 314, bekannt ist.

Die umgebungs- und betriebsbedingte Erwärmung von Lagern, Führungen und Motoren etc. führt bei Maschinen dazu, daß sich diese verformen. Bei Werkzeugmaschinen beeinträchtigen solche Verformungen die Arbeitsgenauigkeit erheblich. Aus diesem Grund ist man bestrebt, diese Verformungen zu verhindern, zu minimieren oder auszugleichen.

Thermische Störeinflüsse an Werkzeugmaschinen können mit konstruktiven oder kompensatorischen Maßnahmen verringert werden.

Konstruktive Maßnahmen können darin bestehen, daß die die Arbeitsgenauigkeit bestimmenden Bauteile in einer verformungsneutralen Lage angeordnet (Spur, G.; Hoffmann, E; Paluncic, Z.: "Reduzierung thermisch bedingter Verformungen von Drehmaschinen-Spindelstöcken durch konstruktive Maßnahmen", Konstruktion 38 (1986) 8, S. 292-296), oder, daß man zwei Bauteile mit verschiedenen Wärmeausdehnungskoeffizienten sich gegeneinander ausdehnen läßt (US-PS 3, 429, 224, DE-PS 16 27 038). Die erste Lösung ist aus funktionellen Gründen oft nicht möglich, die zweite beeinträchtigt das statische und dynamische Verhalten so stark, daß sie bisher keine praktische Bedeutung erlangt hat. Beide sind zudem sehr teuer. Deshalb sind bei numerisch gesteuerten Fertigungssystemen Kompensationsmaßnahmen erforderlich.

Unter kompensatorisch arbeitenden Verfahren versteht man solche, bei denen geregelt oder gesteuert versucht wird, keine durch die Maschine verursachten thermisch bedingten Fehler am Werkstück entstehen zu lassen (Haas, P. de; Heisel, U.: "Kompensation thermischer Deformationen an Werkzeugmaschinen", ZwF 73 (1978) 11, S. 555-560).

Um den Fehler, der sich aufgrund der thermischen Verformungen ergibt, zu verkleinern, wurden bisher zwei unterschiedliche Verfahren angewandt:

- gezielte Beeinflussung des thermischen Verhaltens der Maschine durch geregelte Kühlung oder Heizung (DD-PS 145 074).
- gesteuert oder geregelt kompensierendes Nachstellen des Werkzeugs, Werkstücks oder Koordinatensystems in Abhängigkeit von signifikanten Parametern ohne Eingriff in den Energiehaushalt der Maschine (Pascher, M.: "Kompensation thermisch bedingter Verlagerungen an Werkzeugmaschinen", Ind. Anz. 106 (1984) 75, S. 55-56).

Der erhebliche apparative Aufwand beim ersten Verfahren hatte zur Folge, daß es sich in der Praxis noch nicht durchgesetzt hat. Es wird nur bei Präzisionsmaschinen eingesetzt, wo andere Kompensationsverfahren keine ausreichende Genauigkeit erzielen.

Die Entwicklung auf dem Gebiet der Mikroprozessortechnik spricht für das kompensierende Nachstellen. Dabei hat man die Möglichkeit, den Korrekturwert direkt in den Lageregelkreis oder in die Steuerung der Maschine einzugeben. Bisher wurden jedoch nur wenige Berichte über Untersuchungen veröffentlicht, die sich mit Kompensationsmöglichkeiten an konkreten Systemen befaßten (Mathes, H.: "Steuerungstechnische Maßnahmen zur Steigerung der Arbeitsgenauigkeit von numerisch gesteuerten Mehrspindeldrehmaschinen", Ind. Anz. 103 (1981) 32, S. 24-25).

Gemeinsamkeiten weisen diese Versuche bei der Vorgehensweise auf. Es wird davon ausgegangen, daß die Verlagerung der Wirkpaarzuordnung (Werkzeug-Werkstückzuordnung) ausschließlich mit Temperaturen in ganz bestimmten Meßpunkten zusammenhängt.

Diese Verfahren basieren meist auf mehreren Temperaturmeßstellen und einer Korrelationsfunktion zwischen diesen Temperaturen und der Verlagerung. Für diesen Zusammenhang werden lineare aber auch nichtlineare Ansätze benutzt. Die Koeffizienten dieser Ansätze werden experimentell bestimmt, indem gemessene Verlagerungen mit gemessenen Temperaturen korreliert werden. In die Korrekturfunktionen gehen momentane Temperaturen ein, aber auch solche, die zeitlich zurückliegen.

Die Kompensation wird durchgeführt, indem während des Betriebes Temperaturen gemessen werden. Daraus werden mit der Korrelationsfunktion die Verlagerungen berechnet und über die Steuerung das Werkzeug, das Werkstück oder das Koordinatensystem um den betreffenden Betrag verschoben.

Bei allen instationären Vorgängen genügt es aber nicht, das gesamte Temperaturfeld mit wenigen gemessenen Temperaturen zu charakterisieren. Beim Drehzahlwechsel kommt die Information über die veränderte Wärmebelastung an den Temperaturmeßstellen mit einer Zeitverzögerung an, während sich das Bauteil in der Nähe der Wärmequelle schon stark erwärmt und ausgedehnt hat. Diese Verzögerung zu berücksichtigen, erfordert eine Vermehrung der Temperaturmeßstellen. Die Zahl der Meßstellen kann aber nicht beliebig erhöht werden, weil dann das Aufsuchen der Korrelationsfunktion einen unverhältnismäßig hohen Aufwand erfordert, die Meßwertübertragung namentlich bei bewegten Bauteilen zu teuer ausfielen und der benötigte Platz für mehrere berührungslos arbeitende Übertragungseinheiten nicht zur Verfügung steht.

Der Ausgleich thermisch bedingter Ausdehnungen an Linearmaßstäben, wie sie beispielsweise an Meß- oder Werkzeugmaschinen eingesetzt werden, ist in der DE-A1-36 20 118 beschrieben.

Thermische Deformationen wurden auch durch holographische Aufnahmen ganzer Baugruppen gemessen (Sata, T.; u.a.: "Measurement of Three-Dimensional Displacement of Machine Tool Structure by Means of Holography", Annals of CIRP 23 (1974) 1, S. 137,138). In einem weiteren Fall ist die Rechtwinkligkeit verschiedener Baugruppen zueinander mit einem Laser an einer Großwerkzeugmaschine überprüft worden (Rogel, E.: "Statisches und thermisches Verformungsverhalten von Fräsmaschinen", VDI-Z 126 (1984) 8, S. 47-52). Dabei stand die statische Deformation im Vordergrund. Diese optischen Verfahren sind jedoch nur in beschränktem Maße für Messungen im Betrieb geeignet.

An einer Flachschleifmaschine wurde die Verlagerung der Spindelachse in Y-Koordinatenrichtung mit einem Dehnstab aus Invarstahl gemessen (Brinksmeier, E.; Wulfsberg, J.P.: "Diagnose thermischer Verlagerungen in Schleifmaschinen", wt 77 (1987) 6, S. 311-314). Dazu wurde der Stab über seine gesamte Länge wärmeleitend mit dem Maschinenbett verbunden und an seinen Enden durch eine Klemmvorrichtung an der Maschine befestigt. Die Dehnung des Stabes wurde mittels Dehnungsmeßstreifen gemessen. Die Nachteile dieses Verfahrens liegen darin, daß:

- es ungeeignet ist, um Verformungen an rotierenden Bauteilen zu messen,
- sich Krümmungen des Maschinengestells auf die Meßgenauigkeit auswirken,
- Verformungen der Klemmstücke, die Meßgenauigkeit beeinträchtigen,
- aufgrund der Stabklemmung die Hysteresegefahr groß ist.

Der Erfindung liegt die Aufgabe zugrunde, die thermisch bedingten Verlagerungen der Wirkpaarzuordnung mit Hilfe eines Meßsignals auszugleichen, welches in unmittelbarer Beziehung zu dem Temperaturfeld steht, das diese Verlagerungen bewirkt. Es sollen Verlagerungen in X-, Y- und Z-Richtung sowie Winkelverlagerungen ausgeglichen werden.

Diese Aufgabe wird von einem Verfahren mit den Merkmalen des Anspruches 1 gelöst.

Gegenüber den bisher bekannten Lösungen hat die Erfindung mehrere Vorteile:

- Der Meßfühler ist gegen Verschmutzung und Erschütterungen unempfindlich.
- Die prozentuale Verlängerung eines Bauteils aus Kohlenstoffstahl ist ca. 0,0012 % pro Kelvin (linearer Wärmedehnungskoeffizient). Die relative Widerstandserhöhung eines Leiters aus Platin ist aber ca. 0,4 % pro Kelvin. Zu messen ist eine Größe, die sich mit der Temperatur ca. 330 mal stärker verändert als die Verlagerung selbst.
- Die Widerstandsmessung ergibt ein elektrisches Meßsignal, das sehr einfach übertragen werden kann. Es kann z. B. bei CNC-Werkzeugmaschinen durch einfache Umformung zur Korrektur der Wirkpaarzuordnung verwendet werden. Das Signal ist der Ausdehnung direkt proportional;
- eine Korrelationsfunktion aufzustellen ist überflüssig.
- Werden als Widerstände übliche Materialien mit bekannter Temperaturcharakteristik verwendet, so muß der Meßfühler nicht kalibriert werden.
- Zur Verlagerungsmessung eines Bauteils wird nur ein Meßsignal benötigt.
- Indem Widerstände in Reihe geschaltet werden, können auch Verlagerungen von kompliziert zusammengesetzten Teilen gemessen werden.
- Es ist möglich, Winkelverlagerungen an Bauteilen zu messen.

Mit Hilfe von Ausführungsbeispielen soll die Erfindung nachstehend anhand der Zeichnungen noch näher erläutert werden.

Es zeigt

Figur 1     ein Spindelmodell,
Figur 2     ein Diagramm,
Figur 3     eine Werkzeugmaschinen-Spindeleinheit,
Figur 4     ein Spindelstock und
Figur 5     ein Linearmaßstab.

Bei der Erwärmung um $\Delta\vartheta$ ist die Ausdehnung eines Längenelements dz seiner Länge und der Übertemperatur proportional. $\alpha_L$ ist der Temperaturkoeffizient des Längenelementes.

$$\Delta dz = \alpha_L \, \Delta\vartheta dz \qquad (1)$$

Für kleine Temperaturbereiche, 0° C bis 100° C, kann man die Zunahme des Widerstands mit der Temperatur als linear ansehen:

$$\Delta dR = \alpha_{0;100} \, \Delta\vartheta dR. \qquad (2)$$

$\alpha_{0;100}$ ist der mittlere Temperaturkoeffizient. Er gibt die mittlere relative Widerstandsänderung eines Meßwiderstands je Grad zwischen 0 und 100 °C an.

Der Vergleich zwischen der Ausdehnung, Gl. (1) und der Widerstandserhöhung, Gl. (2), zeigt, daß beide einander proportional sind. Ist diese Charakteristik temperaturunabhängig, so gilt das auch für die integralen Größen:

$$\frac{\Delta \int dz}{\Delta \int dR} = \frac{\Delta z}{\Delta R} = \frac{\alpha_L \, L}{\alpha_{0;100} \, R_0} \qquad (3)$$

L ist die Länge des zu messenden Bauteiles, $R_0$ ist ein Bezugswiderstand.

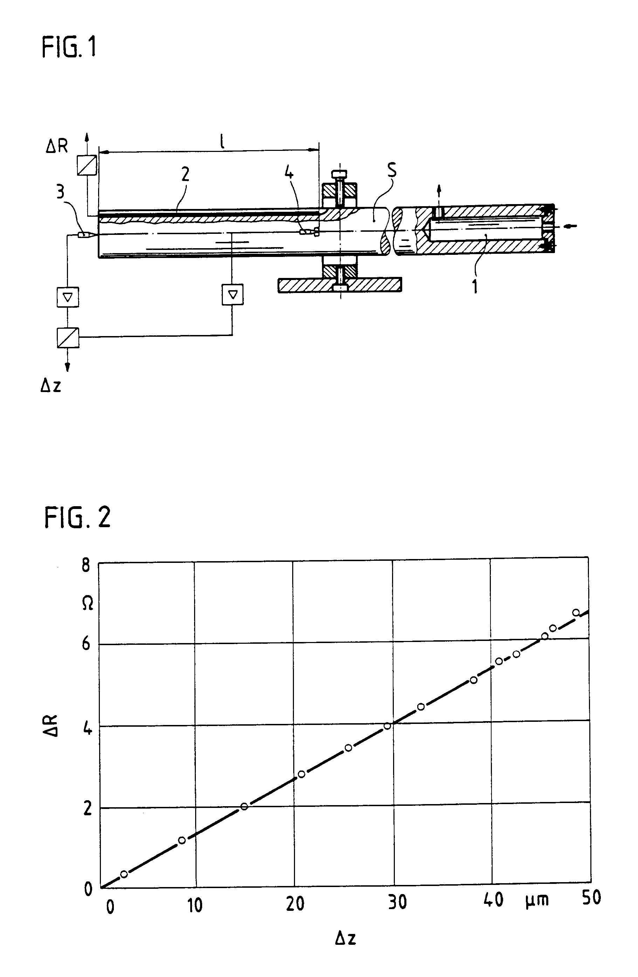

Aus Gl. (3) kann man eine Vorschrift zur Messung von Längenausdehnungen entnehmen. Ein Bauteil, dessen Ausdehnung man messen will, wird mit einem Widerstand in Ausdehnungsrichtung in thermischen Kontakt gebracht. Bei Erwärmung ist die Widerstandserhöhung des elektrischen Leiters der linearen Ausdehnung des Bauteils proportional. Es ist unerheblich, ob das Bauteil eine einheitliche Temperatur hat oder nicht, ob die Temperaturen sich zeitlich ändern oder konstant sind. Der Widerstand ist zu jedem Zeitpunkt ein Maß für die augenblickliche Ausdehnung bzw. die mittlere Temperatur des Bauteils. Diese Zusammenhänge wurden an einem Spindelmodell, Fig. 1, überprüft. Dazu ist eine erwärmte Flüssigkeit mit einer maximalen Temperatur von 70 ° C durch die am rechten Ende der Spindel S angeordnete Bohrung 1 gepumpt worden, wodurch sich auf der linken Spindelseite ein axiales Temperaturprofil einstellte. Diese wurde indirekt durch die mittlere Widerstandsänderung eines Platinwiderstandes 2 der längs der Spindel S eingebettet ist, erfaßt und zudem die Ausdehnung der Strecke mit zwei induktiven Wegaufnehmern, 3 und 4, gemessen. Das Ergebnis hierzu ist in Fig. 2 dargestellt. Fig. 2 zeigt die lineare Abhängigkeit zwischen der Widerstandsänderung $\Delta R$ und der gemessenen Längenänderung $\Delta z$. Diese Abhängigkeit wurde während eines Erwärmungsvorgangs gemessen.

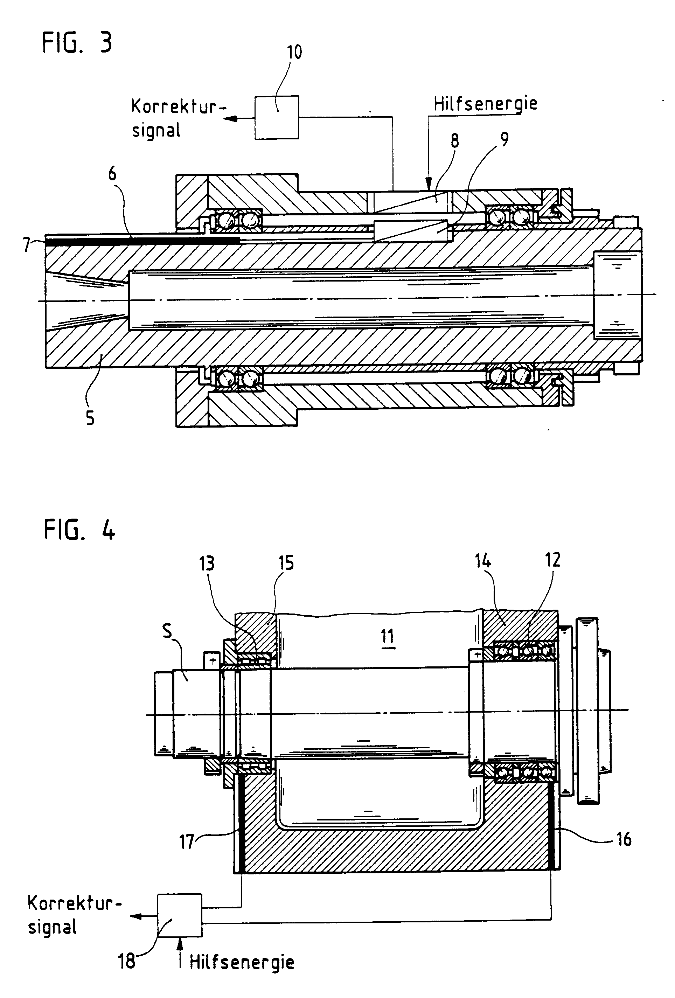

Eine Anwendung des Verfahrens zum Ausgleich von Axial-Verlagerungen an einer Werkzeugmaschinen-Spindeleinheit zeigt Fig. 3. In einen Kragarm 5 ist eine Nut 6 eingearbeitet und in diese ein Platinwiderstand 7 appliziert. Seine wirksame Länge entspricht der Kragarmlänge. Die Stromversorgung des Platinwiderstands 7 und die Meßwertübertragung erfolgen berührungslos durch nicht näher zu beschreibende Elemente 8 und 9. Ein Prozessor 10 berechnet den Korrekturwert und stellt das entsprechende Signal einer Steuerung bzw. einem Lageregelkreis zur Verfügung, die hier nicht gezeigt sind.

Eine Anwendung des Verfahrens zur Kompensation von Winkelverlagerungen einer Spindel S in einem Spindelstock 11 zeigt Fig. 4. Im Betrieb erwärmt sich die arbeitsseitige Lagerung 12 stärker als die antriebsseitige Lagerung 13, da sie mehr belastet und in der Regel als Festlagerung größer ausgeführt ist. Die arbeitsseitige Spindelstockwand 14 dehnt sich deshalb stärker aus als die antriebsseitige Spindelstockwand 15. Die Folge ist eine Schrägstellung der Spindel S bzw. die daraus resultierenden Bearbeitungsfehler. Die Ausdehnungen der für die Bearbeitungsfehler maßgebenden Bauteile werden mit Widerständen 16 und 17 gemessen. Der Widerstand 16 mißt die Verlagerung des arbeitsseitigen Lagers 12 und der Widerstand 17 die Verlagerung des antriebsseitigen Lagers 13. Ein Prozessor 18 berechnet die Neigung der Spindel S und den Korrekturwert.

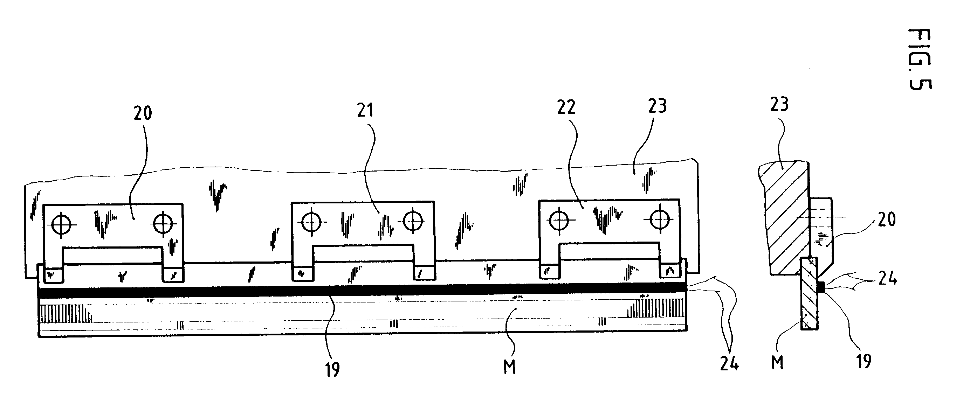

In Figur 5 ist dargestellt, wie die Erfindung an einem Linearmaßstab M realisiert ist. Ein Platinwiderstand 19 ist über die gesamte Länge des Linearmaßstabes M mit innigem thermischen Kontakt aufgebracht. Mittels Spannpratzen 20, 21, 22 ist der Linearmaßstab M an einem Maschinen-Bauteil 23 befestigt. Über Anschlußkabel 24 ist ein nicht dargestellter Prozessor angeschlossen, der die Hilfsenergie liefert und den Korrekturwert berechnet.

**Patentansprüche**

1. Verfahren zum Messen und Ausgleichen von thermisch bedingten Ausdehnungen an Maschinen, insbesondere Werkzeugmaschinen, und Apparaten, mit einer Meßeinrichtung und einer Kompensationseinrichtung, dadurch gekennzeichnet, daß das für die Ausdehnung verantwortliche Temperaturfeld eines Bauteils (S; 5; 14; 15; M), dessen Ausdehnung kompensiert werden soll, mit einem linear im innigen thermischen Kontakt zum Bauteil (S; 5; 14; 15; M) verlegten Widerstand (2; 6; 16; 17; 19) gemessen wird, dessen Ausgangssignal proportional der mittleren Temperatur und damit proportional zur Ausdehnung des Bauteils (S, 5; 14; 15; M) ist und der Kompensationseinrichtung zugeführt wird.

2. Verfahren nach Anspruch 1, dadurch gekennzeichnet, daß die Länge des Widerstandes (2, 6, 16, 17, 19) der Länge des Bauteiles (S, 5, 14, 15, M), dessen Ausdehnung gemessen werden soll, angepaßt wird.

3. Verfahren nach Anspruch 1, dadurch gekennzeichnet, daß mit dem Ausgangssignal des Widerstandes (2, 6, 16, 17, 19) eine Vorrichtung gesteuert wird, die den Eingriffsort des Werkzeuges um die diesem Ausgangssignal entsprechende Strecke verschiebt.

4. Verfahren nach Anspruch 1, dadurch gekennzeichnet, daß mit dem Ausgangssignal des Widerstandes (2, 6, 16, 17, 19) eine Vorrichtung gesteuert wird, die die Position des Werkstückes um die diesem Ausgangssignal entsprechende Strecke verschiebt.

5. Verfahren nach Anspruch 1, dadurch gekennzeichnet, daß mit dem Ausgangssignal des Widerstandes (2, 6, 16, 17, 19) eine Vorrichtung gesteuert wird, die die Position eines Meßsystemes korrigiert.

6. Verfahren nach Anspruch 1, dadurch gekennzeichnet, daß mit dem Ausgangssignal des Widerstandes (19) eine Vorrichtung gesteuert wird, die die Ausdehnung des Maßstabes (M) korrigiert.

7. Verfahren nach Anspruch 1, dadurch gekennzeichnet, daß aus den Ausgangssignalen mehrerer Widerstände ein Steuerungssignal für die Vorrichtung berechnet wird.

**Claims**

1. Method for measuring and compensating machines, particularly machine tools, and apparatus, with a measuring device and a compensating device, characterised in that the temperature field of a component (S; 5; 14; M) responsible for the dilatation, whose dilatation is to be compensated, is measured by means of a resistor (2; 6; 16; 17; 19) placed linearly in the internal thermal contact with the component (S; 5; 14; 15; M), the output signal of said resistor being proportional to the mean temperature and thus proportional to the dilatation of the component (S, 5; 14; 15; M), and is passed to the compensating device.

2. Method according to claim 1, characterised in that the length of the resistor (2, 6, 16, 17, 19) is adapted to the length of the component (S, 5, 14, 15, M) whose dilatation is to be measured.

3. Method according to claim 1, characterised in that the output signal of the resistor (2, 6, 16, 17, 19) controls a device which displaces the point of attack of the tool by the distance corresponding to this output signal.

4. Method according to claim 1, characterised in that the output signal of the resistor (2, 6, 26, 17, 19) controls a device which displaces the position of the workpiece by the distance corresponding to this output signal.

5. Method according to claim 1, characterised in that the output signal of the resistor (2, 6, 16, 17, 19) controls a device which corrects the position of a measurement system.

6. Method according to claim 1, characterised in that the output signal of the resistor (19) controls a device which corrects the dilatation of the scale (M).

7. Method according to claim 1, characterised in that a control signal for the device is calculated from the output signals of a plurality of resistors.

**Revendications**

1.  Procédé de mesure et de compensation des dilatations d'origine thermique sur des machines, en particulier sur des machines-outils et des appareils, comportant un dispositif de mesure et un dispositif de compensation, caractérisé par le fait que l'on mesure le champ de température responsable de la dilatation d'un organe (S; 5; 14; 15; M) dont il s'agit de compenser la dilatation, au moyen d'une résistance (2, 6; 16; 17; 19) qui est en contact thermique étroit avec l'organe (S; 5; 14; 15; M) et dont le signal de sortie est proportionnel à la température moyenne et, par suite, proportionnel à la dilatation de l'organe (S; 5; 14; 15; M), et on transmet ledit signal au dispositif de compensation.

2.  Procédé selon la revendication 1, caractérisé par le fait que l'on adapte la longueur de la résistance (2, 6 16; 17, 19) à la longueur de l'organe (S; 5; 14; 15; M) dont il s'agit de mesurer la dilatation.

3.  Procédé selon la revendication 1, caractérisé par le fait qu'avec le signal de sortie de la résistance (2, 6, 16, 17, 19), on commande un dispositif qui déplace le point d'action de l'outil de la distance correspondant au signal de sortie.

4.  Procédé selon la revendication 1, caractérisé par le fait qu'avec le signal de sortie de la résistance (2, 6, 16, 17, 19), on commande un dispositif qui déplace la position de la pièce de la distance correspondant au signal de sortie.

5.  Procédé selon la revendication 1, caractérisé par le fait qu'avec le signal de sortie de la résistance (2, 6, 16, 17, 19), on commande un dispositif qui corrige la position d'un dispositif de mesure.

6.  Procédé selon la revendication 1, caractérisé par le fait qu'avec le signal de sortie de la résistance (19), on commande un dispositif qui corrige la longueur de la règle de emsure (M).

7.  Procédé selon la revendication 1, caractérisé par le fait que l'on calcule un signal de commande du dispositif à partir des signaux de sortie de plusieurs résistances.

FIG. 1

FIG. 2

FIG. 3

Korrektursignal

10

Hilfsenergie

8    9

6

7

5

FIG. 4

13    15        14    12

S

11

17            16

Korrektursignal

18    Hilfsenergie

# FIG. 5